# EUROPEAN PATENT SPECIFICATION

(11) **EP 1 226 002 B1**
(45) Date of publication and mention of the grant of the patent: **13.10.2004**
(21) Application number: 00952084.2
(22) Date of filing: 09.08.2000
(51) Int. Cl.: B23P 15/14

(54) **METHOD FOR STRENGTHENING A GEAR WHEEL, AND A GEAR WHEEL**
VERFAHREN ZUR STAERKUNG EINES GETRIEBEZAHNRADES UND GETRIEBEZAHNRAD
MODELE RENFORCE DE PIGNON D'ENGRENAGE ET PROCEDE A CET EFFET

(30) Priority: 10.08.1999 NO 993835
(43) Date of publication of application: 31.07.2002
(73) Proprietor: Engineering & Drilling Machinery AS, 4349 Bryne (NO)
(72) Inventor: EILERTSEN, Bjorn, N-4085 Hundväg (NO)
(74) Representative: Onn, Thorsten
(86) International application number: PCT/NO2000/000260
(87) International publication number: WO 2001/011261

(56) References cited:
- DE-A1- 3 831 627
- DE-A1- 19 737 111

## Description

The invention relates to a method for strengthening a gear wheel, according to the preamble of claim 1, as for example known from DE-A-3 831 627.

The invention also relates to a gear wheel according to the preamble of claim 4.

Gear wheels in cranes and lifting devices are highly stressed components. Experience has shown that, for example, driving gear wheels in jack-up systems for jack-up offshore platforms, driving gear wheels interacting with vertical toothed racks, have a surprisingly short useful life. Their useful life is notably shorter than that of the interacting toothed racks, which is due to the fact that the gear wheel teeth are quite naturally exposed to a greater number of alternating loads than the teeth of the rack.

Studies have shown that the teeth of driving gear wheels in large structures are exposed to motions that ultimately cause fracture in the root of the tooth.

It is an object of the invention to provide a method and an apparatus for strengthening gear wheels, particularly, but not exclusively, large driving gear wheels that are used in cranes and lifting devices.

Based on the acknowledgement of the fact that the teeth are subject to breakage as a consequence of the alternating motions in the tooth itself, most notably in the roots of the teeth, it is proposed according to the invention to fix each individual tooth in the gear wheel in the direction of circumference in order thereby to counteract the said tooth motions during operations, i.e., that each individual tooth will be like a theoretical beam fixed at both ends.

According to the invention, a method is therefore proposed for strengthening a gear wheel, according to claim 1.

It is especially advantageous if the rings are secured around the gear wheel in such manner that the rings will be firmly shrunk onto the gear wheel with a material-technical tensile/compressive strength within 80% of the 0.2% elastic elongation range of the material (steel).

According to the invention, a gear wheel is also proposed according to claim 4.

It is especially advantageous if the strengthening rings are shrunk on in such manner that the rings will remain firmly shrunk onto the gear wheel with a material-technical tensile/compressive strength within 80% of the 0.2% elastic elongation range of the material (steel).

Each individual strengthening ring is designed in principle like an internal ring gear having teeth intended for engagement in the tooth pockets of the gear wheel, with clearance towards the base of the teeth of the gear wheel or clearance towards the base of the teeth of both gear wheel and ring.

The invention can be carried out in a particularly advantageous way by envisaging the toothed rim of the driving gear stretched out to a correspondingly larger circle, shrink fits being chosen for this circle in accordance with the ISO tables of limits and fits, and by making similar considerations for the ring.

The invention will now be described in more detail with reference to the drawing, wherein:
- Fig. 1: shows a gear wheel viewed looking towards the teeth;
- Fig. 2: is a side view of a gear wheel;
- Fig. 3: is a section taken from Fig. 1;
- Fig. 4: is a section taken from Fig. 2;
- Fig. 5: is a section of a gear wheel and ring in the area where they are secured together; and
- Fig. 6: is another section of a gear wheel and ring in an area where they are secured together.

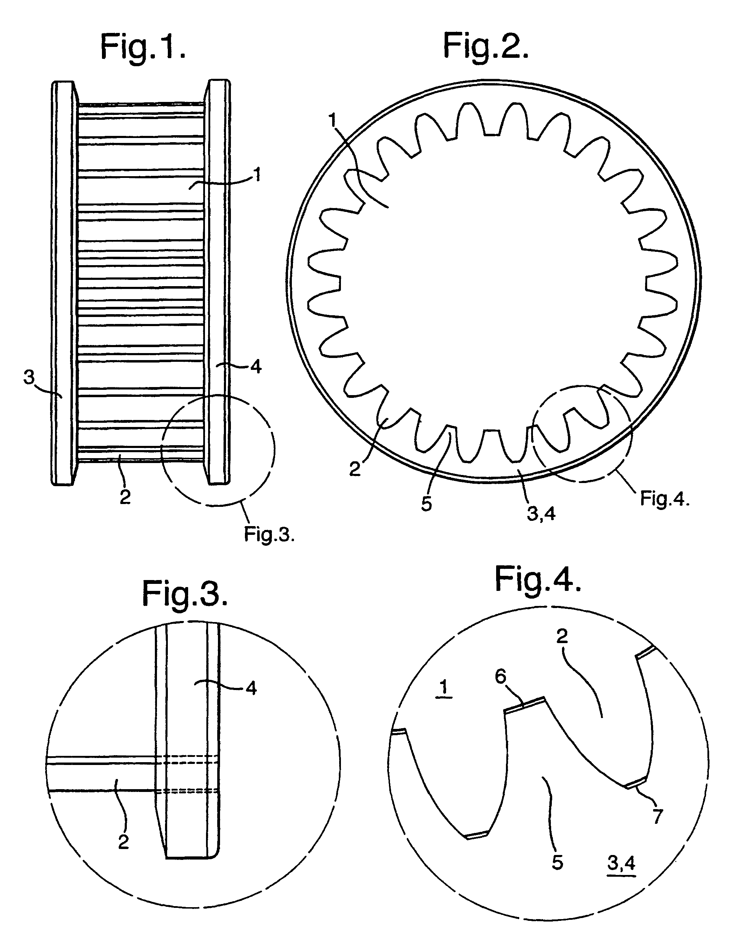

The gear wheel 1 shown in Figs. 1 and 2 has a plurality of teeth 2 around its circumference. At each end side of the gear wheel 1 there is shrink-fitted a strengthening ring 3 and 4 respectively. Each ring 3, 4 is made in the form of an internal gear wheel with teeth 5. The teeth are shaped to fit with the teeth 2 on the gear wheel 1, see in particular Fig. 4.

As can be seen from Fig. 1 and from the section in Fig. 3, each tooth 2 on the gear wheel 1 will be fixed like a beam between the two strengthening rings 3 and 4, and the rings 3, 4 will counteract motions of each individual tooth 2 in the direction of circumference when the teeth are subjected to forces in interaction with another set of teeth on a gear wheel or a toothed rack (not shown).

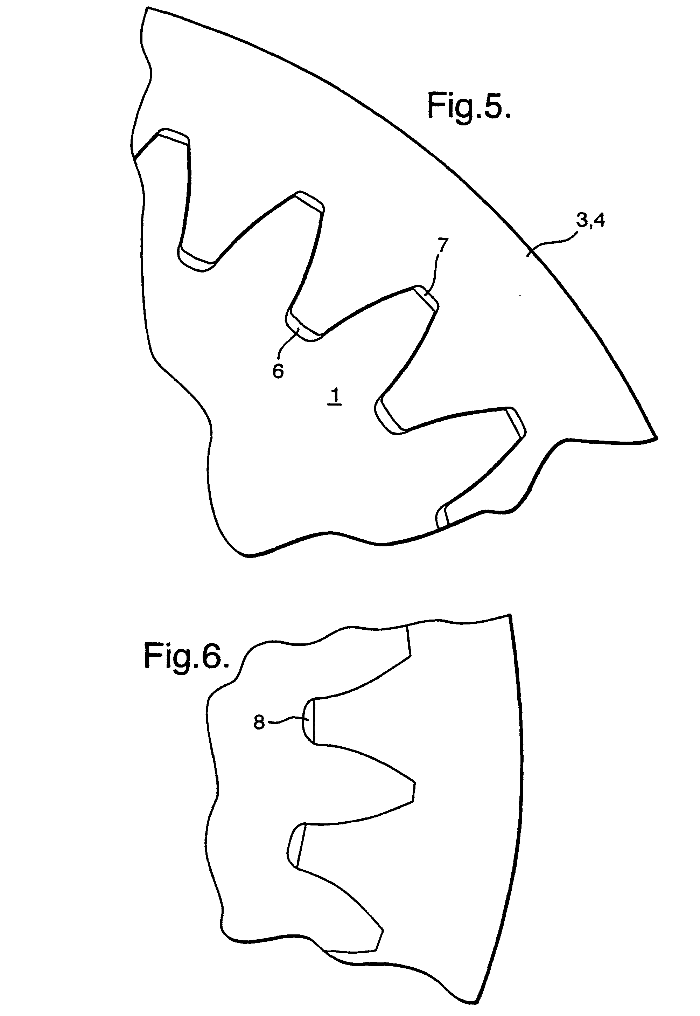

As shown in Fig. 4, a clearance 6, 7 is provided between the tooth crest and the tooth base on/in the gear wheel and ring. This ensures a best possible flank contact between the teeth 2 and 5 as well as a reduction in the stress of radial forces, see also Figs. 5 and 6. In Fig. 6 there is a clearance 8 only between ring-tooth crest and ring-tooth base.

In order to achieve the best possible effect, each individual strengthening ring 3, 4 is fitted on/around the gear wheel 1 by producing/utilising a tensile force within 80% of the permanent elongation limit of the material (steel). This is achieved by suitable sizing of each individual ring prior to fitting.

It is particularly expedient if, in this connection, it is possible to envisage the toothed rim stretched out to its correspondingly larger circle, shrink fits for this circle being selected in accordance with the ISO tables of limits and fits. Similar considerations are made for the strengthening rings.

The invention permits a reduction in the danger of fatigue fractures without the need to increase the size, and consequently the material consumption.

## Claims

1. A method for strengthening a gear wheel (1), wherein strengthening rings (3,4) are placed around the gear wheel and connected to the gear wheel teeth (2), **characterised in that** each tooth (2) is fixed like a theoretical beam between two extreme points **in that** two strengthening wheels (3, 4), each shaped on its inside in conformity with the gear wheel teeth (2), are shrink-fitted around the gear wheel.

2. A method according to claim 1, **characterised in that** the strengthening rings (3, 4) are shrink-fitted around the gear wheel (1) in such manner that the strengthening rings (3, 4) will be firmly shrunk onto the gear wheel (1) with a material-technical tensile/compressive strength within 80% of the 0.2% elastic elongation range of the material (steel).

3. A method according to claim 2, **characterised in that** during the sizing process the toothed rim of the driving gear (1) is envisaged stretched out to a correspondingly larger circle, shrink fits being selected for this circle in accordance with the ISO tables of limits and fits, and that similar considerations are made for each strengthening ring (3, 4).

4. A gear wheel (1) having surrounding strengthening rings (3,4) connected to the gear wheel teeth (2), **characterised in that** each tooth (2) is fixed like a theoretical beam between two extreme points **in that** two strengthening rings (3, 4), shaped on their insides in conformity with the gear wheel teeth (2), are shrink-fitted around the gear wheel.

5. A gear wheel according to claim 4, **characterised in that** the strengthening rings (3, 4) are shrink-fitted in such manner that the strengthening rings (3, 4) will be firmly shrunk onto the gear wheel (1) with a material-technical tensile/compressive strength within 80% of the 0.2% elastic elongation range of the material (steel).

## Patentansprüche

1. Verfahren zum Verstärken eines Zahnrades (1), bei welchem Verstärkungsringe (3, 4) um das Zahnrad platziert und mit den Zahnradzähnen (2) verbunden werden, **dadurch gekennzeichnet, dass** jeder Zahn (2) wie ein theoretischer Balken zwischen zwei Extrempunkten befestigt wird, indem zwei Verstärkungsräder (3, 4), die jeweils auf ihrer Innenseite in Übereinstimmung mit den Zahnradzähnen (2) geformt sind, um das Zahnrad aufgeschrumpft werden.

2. Verfahren nach Anspruch 1, **dadurch gekennzeichnet, dass** die Verstärkungsringe (3, 4) um das Zahnrad (1) derart aufgeschrumpft sind, dass die Verstärkungsringe (3, 4) fest auf das Zahnrad (1) mit einer materialtechnischen Zug-/Druckspannung innerhalb von 80% der elastischen 0,2%-Dehnungsgrenze des Materials (Stahl.) aufgeschrumpft sind.

3. Verfahren nach Anspruch 2, **dadurch gekennzeichnet, dass** während des Kalibriervorganges der Zahnkranz des Antriebszahnrades (3) als entsprechend größerer Kreis. ausgedehnt vorgestellt wird, wobei die Schrumpfpassungen für diesen Kreis in Übereinstimmung mit den ISO-Tabellen der Grenzwerte und Passungen ausgewählt werden, und dass ähnliche Überlegungen für jeden Verstärkungsring (3, 4) angestellt werden.

4. Zahnrad (1), das umgebende Verstärkungsringe (3, 4) besitzt, die mit den Zahnradzähnen (2) verbunden sind, **dadurch gekennzeichnet, dass** jeder Zahn (2) wie ein theoretischer Balken zwischen zwei Extrempunkten befestigt ist, indem zwei Verstärkungsringe (3, 4), die auf ihren Innenseiten in Übereinstimmung mit den Zahnradzähnen (2) geformt sind, um das Zahnrad aufgeschrumpft sind.

5. Zahnrad nach Anspruch 4, **dadurch gekennzeichnet, dass** die Verstärkungsringe (3, 4) derart aufgeschrumpft sind, dass die Verstärkungsringe (3, 4) fest auf das Zahnrad (1) mit einer materialtechnischen Zug-/Druckspannung innerhalb von 80% der elastischen 0,2%-Dehngrenze des Materials (Stahl) aufgeschrumpft sind.

## Revendications

1. Procédé pour renforcer une roue dentée (1), dans lequel des bagues de renforcement (3, 4) sont placées autour de la roue dentée et reliées aux dents de la roue dentée (2), **caractérisé en ce que** chaque dent (2) est fixée comme une poutre théorique entre deux points extrêmes dans ces deux bagues de renforcement (3, 4), chacune étant conformée sur son intérieur en conformité avec les dents (2) de la roue dentée, et étant adaptée par contraction autour de la roue dentée.

2. Procédé selon la revendication 1, **caractérisé en ce que** les bagues de renforcement (3, 4) sont adaptées par contraction autour de la roue dentée (1) de telle façon que les bagues de renforcement (3, 4) sont contractées fermement sur la roue dentée (1) avec une résistance à la compression/traction mécanique du matériau comprise dans 80 % de l'intervalle d'allongement élastique à 0,2 % du matériau (acier).

3. Procédé selon la revendication 2, **caractérisé en ce que**, pendant le procédé de dimensionnement, le rebord denté de la roue dentée (1) est étiré jusqu'à un cercle plus grand correspondant, des adaptations par contraction étant choisies pour ce cercle conformément aux tables ISO de limitations et d'adaptations, et **en ce que** des considérations analogues sont appliqués pour chaque bague de renforcement (3, 4).

4. Roue dentée (1) ayant des bagues de renforcement entourantes (3, 4) reliées aux dents (2) de la roue dentée, **caractérisée en ce que** chaque dent (2) est fixée comme une poutre théorique entre deux points extrêmes dans ces deux bagues de renforcement (3, 4), conformées sur leur intérieur en conformité avec les dents (2) de la roue dentée et adaptées par contraction autour de la roue dentée.

5. Roue dentée selon la revendication 4, **caractérisée en ce que** les bagues de renforcement (3, 4) sont adaptées par contraction de telle façon que les bagues de renforcement (3, 4) sont contractées fermement sur la roue dentée (1) avec une résistance à la compression/traction mécanique du matériau comprise dans 80 % de l'intervalle d'allongement élastique à 0,2 % du matériau (acier).
